# FASCICULE DE BREVET EUROPEEN

(11) **EP 0 965 962 B1**
(45) Date de publication et mention de la délivrance du brevet: **07.10.2009**
(21) Numéro de dépôt: 99401473.6
(22) Date de dépôt: 15.06.1999
(51) Int. Cl.: G07F 17/16, G07F 17/24

(54) **Terminal de communication en milieu urbain**
Kommunikationsendegerät in städtischer Umgebung
Communication terminal in urban area

(30) Priorité: 19.06.1998 FR 9807805
(43) Date de publication de la demande: 22.12.1999
(73) Titulaire: PARKEON, 75015 Paris (FR)
(72) Inventeur: Brusseaux, Thierry M., 25720 Avenay (FR)
(74) Mandataire: Domenego, Bertrand

(56) Documents cités:
- WO-A-94/20330
- WO-A-94/27258
- WO-A-97/37328
- DE-U- 29 708 833
- FR-A- 2 532 805
- US-A- 5 742 229

## Description

La présente invention concerne une terminal de communication en milieu urbain. L'invention trouve une application particulièrement avantageuse dans le domaine des services que peut offrir une municipalité à ses visiteurs.

Toute personne arrivant dans une ville a généralement besoin d'informations qui sont, soit des informations municipales, soit des informations commerciales.

Les informations dites municipales sont, par exemple, le plan de la ville, l'itinéraire à suivre pour se rendre à un endroit donné, le réseau de transport en commun, l'emplacement des sites à visiter, des musées, des cinémas, théâtres, etc....

Les informations dites commerciales concernent la publicité permettant aux commerces et aux services de la ville de se faire connaître auprès de la clientèle des visiteurs. A l'inverse, il peut être intéressant pour ces mêmes visiteurs d'avoir la possibilité dés leur arrivée de faire directement des réservations d'hôtels, de restaurants, de taxis, etc...

Or, hormis de rares panneaux de plans de ville ou de quartier accompagnés de quelques renseignements touristiques ou publicitaires, il n'existe pas aujourd'hui en milieu urbain de réels moyens de communication interactifs qui permettraient au visiteur d'accéder facilement et rapidement aux services dont il a besoin.

Aussi, le problème technique à résoudre par l'objet de la présente invention est de proposer un terminal de communication en milieu urbain qui serait apte à délivrer les informations municipales et commerciales précitées de manière simple pour l'utilisateur, à faible coût pour la municipalité, et qui pourrait être organisé en un réseau relativement dense et donc facile d'accès.

WO-A-9737328 décrit un terminal horodateur relié à un serveur. Le serveur a une entrée permettant au public d'accéder à des informations concernant le parking.

US-A-5742229 décrit une station de distribution d'énergie relié à un serveur permettant en outre de réserver une chambre d'hôtel. Le transfert de données se fait pas le connecteurs de distribution d'énergie. Le système nécessite un terminal embarqué dans le véhicule.

La solution au problème technique posé consiste, selon la présente invention, en un terminal de communication en milieu urbain, tel que défini par la revendication 1.

Ainsi, l'invention permet de réaliser simplement un terminal de communication en milieu urbain en couplant les fonctions liées à l'horodateur proprement dit, à savoir le paiement du stationnement, à celles liées à la communication d'informations. Toute ville équipée, ou devant être équipée d'horodateurs, peut donc facilement, et sans surcoût très important, disposer de moyens d'accès aux informations municipales et commerciales précitées, sans avoir à développer un terminal spécifique dédié à la communication avec un serveur de ces informations. De plus, le choix d'horodateurs comme supports de terminaux de communication d'informations est particulièrement judicieux car ils se rencontrent en grand nombre dans les zones de stationnement payant, c'est-à-dire principalement dans les centres villes, là où le besoin d'information est le plus grand. Enfin, le terminal objet de l'invention, bénéficie de la même protection contre l'environnement et le vandalisme que l'horodateur.

Un avantage du terminal de communication conforme à l'invention est que tout visiteur arrivant en voiture dans une ville doit en premier lieu garer sa voiture, et pour cela, il se dirigera naturellement vers un horodateur et, en même temps qu'il paiera sont stationnement, il y trouvera la possibilité d'accéder à toutes les informations qui l'intéressent.

Un autre avantage de l'invention est qu'un horodateur disposant, par construction, de moyens d'impression destinés à éditer le ticket de stationnement, ces moyens d'impression peuvent aussi être utilisés pour fournir à l'usager certaines informations sous forme papier, telle qu'un itinéraire, les horaires de transport en commun, etc.... Il est également possible pour les commerçants de délivrer par l'intermédiaire du terminale de l'invention des bons de réduction dans certains magasins, salles de spectacle, etc..., de manière à attirer vers eux cette clientèle potentielle que sont les utilisateurs d'horodateurs.

De même, un horodateur présentant des moyens de paiement, par cartes notamment, on peut imaginer d'utiliser le terminal de communication, objet de l'invention, pour fournir des services payants, comme la réservation directe d'un billet de spectacle ou d'une chambre d'hôtel.

On comprendra de plus qu'encore un autre avantage de l'invention est qu'elle peut être implantée par construction dans les nouveaux horodateurs, mais aussi dans toute base déjà installée d'horodateurs, la fonction de communication d'informations étant obtenue en ajoutant les équipements nécessaires, à savoir l'unité centrale, les moyens de communication et l'interface de sélection.

La description qui va suivre en regard du dessin annexé, donné à titre d'exemple non limitatif, fera bien comprendre en quoi consiste l'invention et comment elle peut être réalisée.

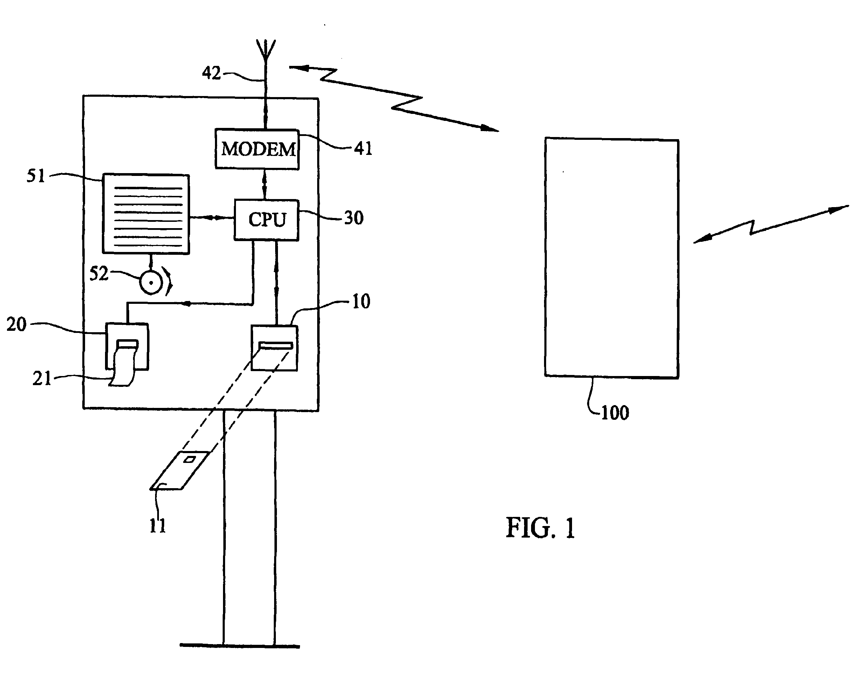

La figure 1 est une vue de face schématique d'un terminal de communication conforme à l'invention.

Sur la figure 1 est représenté un terminal de communication en milieu urbain construit sur la base d'un horodateur de stationnement payant. On y retrouve en effet les moyens permettant d'assurer les fonctions essentielles d'un horodateur, c'est-à-dire des moyens de paiement, ici un lecteur 10 de cartes 11 à mémoire électronique, et des moyens 20 d'impression, notamment prévus pour l'édition d'un ticket 21 de stationnement.

De manière que l'horodateur puisse également fonctionner en terminal de communication, on lui adjoint d'autres organes tels qu'une unité centrale 30 du type ordinateur personnel, des moyens de communication avec un serveur 100 d'informations qui sont un modem 41 et une antenne 42, et une interface de sélection comprenant un écran graphique 51 et un dispositif de sélection d'informations affichées sur l'écran graphique 51, qui, dans l'exemple de la figure 1, est une molette 52 du type celle décrite dans le brevet français No. 2 705 481, mais qui pourrait être également un ensemble de touches tactiles disposées sur l'écran 51.

Lorsqu'un automobiliste arrivant dans une ville veut parquer sa voiture dans une zone de stationnement payant, il se rend à un horodateur, paye le stationnement pour la durée qu'il a choisie au moyen d'une carte 11 de paiement ou en espèces, et il reçoit en échange un ticket 21 de stationnement élaboré par les moyens 20 d'impression. L'horodateur fonctionnant comme terminal de communication, ce même automobiliste, avant de retourner à son véhicule pour y placer le ticket 21, a la possibilité d'avoir accès à diverses informations affichées sur l'écran graphique 51. A l'aide de la molette 52 il peut sélectionner les informations qui l'intéressent. En particulier, il peut demander à consulter le plan de la ville, connaître un itinéraire, se renseigner sur les transports en commun, les spectacles, les hôtels, les restaurants, etc.... Toutes ces informations sont visualisées à l'écran et éventuellement fournies sous forme papier par les moyens 20 d'impression présents dans l'horodateur.

L'utilisateur a également la possibilité d'effectuer des opérations à caractère financier, comme la réservation et le paiement d'une chambre d'hôtel directement sur le terminal. Pour cela, il utilise une carte de paiement, carte bancaire par exemple, en combinaison avec le lecteur 10 de cartes à l'horodateur.

D'une manière générale, les informations disponibles sur le terminal peuvent être saisies soit directement sur le serveur 100, soit le serveur va les rechercher sur d'autres serveurs existants, du type site Web d'une ville, d'un office de tourisme, etc... Ces informations sont alors téléchargées régulièrement sur le terminal. On peut également imaginer que le terminal fonctionne entièrement "en ligne" (on-line), connecté en permanence au serveur 100 ou à un site Web, mais les temps d'accès et les coûts de communication sont plus importants, aussi on préférera un fonctionnement "hors-ligne" (off-line), le terminal n'étant pas connecté en permanence mais avec des remises à jour régulières des informations stockées. Par contre, une connexion "en ligne" est nécessaire lorsqu'une transaction financière doit être effectuée.

## Revendications

1. Terminal de communication en milieu urbain, constitué d'un horodateur de stationnement payant comprenant des moyens (20) d'impression et des moyens (10) de paiement, et comprenant en outre une unité centrale (30) et des moyens (41, 42) de communication avec au moins un serveur (100) d'informations, **caractérisé en ce que** l'horodateur comprend une interface (51, 52) de sélection d'informations, par laquelle un utilisateur peut sélectionner des informations auxquelles il souhaite accéder, lesdites informations étant téléchargées dans ledit terminal depuis le serveur (100) via lesdits moyens de communication.

2. Terminal de communication selon la revendication 1, **caractérisé en ce que** ladite interface de sélection d'informations comprend un écran graphique (51) et un dispositif (52) de sélection d'informations affichées sur ledit écran graphique.

3. Terminal de communication selon la revendication 2, **caractérisé en ce que** ledit dispositif de sélection est une molette (52).

4. Terminal de communication selon la revendication 2, **caractérisé en ce que** ledit dispositif de sélection est une pluralité de touches tactiles disposées sur l'écran graphique.

5. Terminal de communication selon l'une quelconque des revendications 1 à 4, **caractérisé en ce que** ledit terminal fonctionne "en ligne", connecté en permanence audit serveur (100).

6. Terminal de communication selon l'une quelconque des revendications 1 à 4, **caractérisé en ce que** ledit terminal fonctionne "hors ligne", non connecté en permanence audit serveur (100).

7. Terminal de communication selon l'une quelconque des revendications précédentes, **caractérisé en outre en ce que** l'interface de sélection d'informations (51, 52) comprend un écran graphique (51) sur lequel sont affichées des informations que l'utilisateur peut sélectionner pour y avoir accès.

8. Terminal de communication selon l'une quelconque des revendications précédentes, **caractérisé en ce que** les moyens d'impression (20), les moyens de paiement (10), l'unité centrale (30), les moyens de communication (41, 42), et l'interface de sélection d'informations (51, 52) sont regroupés dans un même boîtier.

9. Terminal de communication selon l'une quelconque des revendications précédentes, **caractérisé en outre en ce que** les moyens de communication (41, 42) comprennent une antenne (42).

10. Terminal de communication selon l'une quelconque des revendications précédentes, **caractérisé en ce qu'**il est adapté pour fournir les informations sous forme papier par les moyens d'impression (20).

11. Ensemble d'un terminal de communication selon l'une quelconque des revendications précédentes, et du serveur d'information (100), **caractérisé en ce que** le serveur d'information (100) est adapté pour aller rechercher les informations sur d'autres serveurs existants.

12. Ensemble d'un terminal de communication selon l'une quelconque des revendications précédentes, et du serveur d'information (100), **caractérisé en ce que** le serveur d'information (100) est adapté pour aller rechercher les informations sur le site Web d'une ville, ou le site Web d'un office de tourisme.

## Claims

1. Terminal for communication in an urban environment, constituted by a parking meter including printing means (20) and payment means (10) and including in addition a central processing unit (30) and means (41, 42) for communication with at least one data server (100), **characterised in that** the parking meter includes an interface (51, 52) for selection of data, by means of which a user can select data he/she wishes to access, said data being downloaded in said terminal from the server (100) via said communication means.

2. Communication terminal according to Claim 1, **characterised in that** said interface for selection of data includes a graphic display (51) and a device (52) for selection of data displayed on said graphic display.

3. Communication terminal according to Claim 2, **characterised in that** said selection device is a knob (52).

4. Communication terminal according to Claim 2, **characterised in that** said selection device is a plurality of touch-sensitive keys arranged on the graphic display.

5. Communication terminal according to any one of Claims 1 to 4, **characterised in that** said terminal operates 'on-line', being permanently connected to said server (100).

6. Communication terminal according to any one of Claims 1 to 4, **characterised in that** said terminal operates 'off-line', not being permanently connected to said server (100).

7. Communication terminal according to any one of the preceding claims, further **characterised in that** the interface (51, 52) for selection of data includes a graphic display (51) on which data are displayed that the user can select in order to have access thereto.

8. Communication terminal according to any one of the preceding claims, **characterised in that** the printing means (20), the payment means (10), the central processing unit (30), the communication means (41, 42) and the interface (51, 52) for selection of data are grouped together in the same casing.

9. Communication terminal according to any one of the preceding claims, further **characterised in that** the communication means (41, 42) include an antenna (42).

10. Communication terminal according to any one of the preceding claims, **characterised in that** it is suitable to provide the data in paper form by means of the printing means (20).

11. Assembly constituted by a communication terminal according to any one of the preceding claims and by the data server (100), **characterised in that** the data server (100) is suitable to seek out the data on other existing servers.

12. Assembly constituted by a communication terminal according to any one of the preceding claims and by the data server (100), **characterised in that** the data server (100) is suitable to seek out the data on the website of a town or the website of a tourist office.

## Patentansprüche

1. Kommunikationsendgerät in städtischer Umgebung, gebildet aus einem Parkscheinautomaten, aufweisend Mittel (20) zum Drucken und Mittel (10) zum Bezahlen, und ferner eine Zentraleinheit (30) und Mittel (41, 42) für die Kommunikation mit mindestens einem Informationsserver (100) aufweisend, **dadurch gekennzeichnet, dass** der Parkscheinautomat eine Schnittstelle (51, 52) zum Auswählen von Informationen aufweist, mittels welcher ein Benutzer Informationen auswählen kann, auf die er zugreifen möchte, wobei die Informationen in dem Endgerät über die Kommunikationsmittel von dem Server (100) heruntergeladen werden.

2. Kommunikationsendgerät gemäß Anspruch 1, **dadurch gekennzeichnet, dass** die Schnittstelle zum Auswählen von Informationen einen graphischen Bildschirm (51) und eine Vorrichtung (52) zum Auswählen von Informationen aufweist, die auf dem graphischen Bildschirm angezeigt werden.

3. Kommunikationsendgerät gemäß Anspruch 2, **dadurch gekennzeichnet, dass** die Auswählvorrichtung ein Drehschalter (52) ist.

4. Kommunikationsendgerät gemäß Anspruch 2, **dadurch gekennzeichnet, dass** die Auswählvorrichtung eine Mehrzahl von Berührungstasten ist, die auf dem graphischen Bildschirm angeordnet sind.

5. Kommunikationsendgerät gemäß einem der Ansprüche 1 bis 4, **dadurch gekennzeichnet, dass** das Endgerät "online", in dauerhafter Verbindung zu dem Server (100) funktioniert.

6. Kommunikationsendgerät gemäß einem der Ansprüche 1 bis 4, **dadurch gekennzeichnet, dass** das Endgerät "offline", ohne dauerhafte Verbindung zu dem Server (100) funktioniert.

7. Kommunikationsendgerät gemäß einem der vorhergehenden Ansprüche, ferner **dadurch gekennzeichnet, dass** die Schnittstelle zur Auswahl von Informationen (51, 52) einen graphischen Bildschirm (51) aufweist, auf dem Informationen angezeigt sind, die der Benutzer auswählen kann, damit er auf diese zugreifen kann.

8. Kommunikationsendgerät gemäß einem der vorhergehenden Ansprüche, **dadurch gekennzeichnet, dass** die Mittel zum Drucken (20), die Mittel zum Bezahlen (10), die Zentraleinheit (30), die Kommunikationsmittel (41, 42) und die Schnittstelle zur Auswahl von Informationen (51, 52) in einem selben Gehäuse gruppiert sind.

9. Kommunikationsendgerät gemäß einem der vorhergehenden Ansprüche, ferner **dadurch gekennzeichnet, dass** die Kommunikationsmittel (41, 42) eine Antenne (42) aufweisen.

10. Kommunikationsendgerät gemäß einem der vorhergehenden Ansprüche, **dadurch gekennzeichnet, dass** es zum Bereitstellen der Informationen in Papierform mittels der Mittel zum Drucken (20) angepasst ist.

11. Anordnung eines Kommunikationsendgerätes gemäß einem der vorhergehenden Ansprüche und des Informationsservers (100), **dadurch gekennzeichnet, dass** der Informationsserver (100) zum Suchen nach den Informationen auf anderen vorhandenen Servern angepasst ist.

12. Anordnung eines Kommunikationsendgerätes gemäß einem der vorhergehenden Ansprüche und des Informationsservers (100), **dadurch gekennzeichnet, dass** der Informationsserver (100) zum Suchen nach den Informationen auf der Internetseite einer Stadt oder auf der Internetseite eines Fremdenverkehrsamtes angepasst ist.
